# EUROPÄISCHE PATENTSCHRIFT

(11) **EP 3 793 776 B1**
(45) Veröffentlichungstag und Bekanntmachung des Hinweises auf die Patenterteilung: **17.08.2022**
(21) Anmeldenummer: 20710089.2
(22) Anmeldetag: 04.03.2020
(51) Int. Cl.: B25F 5/02

(54) **WERKZEUGMASCHINE, INSBESONDERE AKKU-BOHRER ODER AKKU-SCHRAUBER**
MACHINE TOOL, IN PARTICULAR CORDLESS DRILL OR CORDLESS SCREWDRIVER
MACHINE-OUTIL, EN PARTICULIER PERCEUSE OU VISSEUSE SANS FIL

(30) Priorität: 08.05.2019 DE 102019111970
(43) Veröffentlichungstag der Anmeldung: 24.03.2021
(73) Patentinhaber: Festool GmbH, 73240 Wendlingen am Neckar (DE)
(72) Erfinder: RUSCH, Marc, 73728 Esslingen am Neckar (DE); SEILER, Peter, 89160 Dornstadt (DE)
(74) Vertreter: DREISS Patentanwälte PartG mbB
(86) Internationale Anmeldenummer: PCT/EP2020/055615
(87) Internationale Veröffentlichungsnummer: WO 2020/224824

(56) Entgegenhaltungen:
- EP-A1- 1 281 486
- EP-A2- 1 072 842
- DE-A1- 3 738 563
- DE-A1-102014 209 032
- DE-A1-102015 226 420
- DE-C1- 10 215 871
- DE-U1- 8 912 224

## Beschreibung

Die Erfindung betrifft eine Handwerkzeugmaschine, insbesondere ein elektrisch betriebene Handwerkzeugmaschine, wie beispielsweise einen Akku-Schrauber oder einen Akku-Bohrer, mit einem Gehäuse, mit einer Bearbeitungsachse, entlang der ein Werkzeug angeordnet oder anordenbar ist, mit einer Leuchteinrichtung, die wenigstens ein aktivierbares Leuchtmittel aufweist, wobei die Leuchteinrichtung zur Beleuchtung eines Arbeitsbereichs im Betrieb Arbeitslicht innerhalb eines Strahlwinkels mit einer, entlang einer Hauptabstrahlrichtung erhöhten oder maximalen Lichtintensität erzeugt, und mit wenigstens einem Lichtsensor zur Messung der Lichtintensität.

Eine derartige Handwerkzeugmaschine ist beispielsweise aus der EP 1 072 842 B1, welche den Oberbegriff von Anspruch 1 offenbart, bekannt. Dort sind mehrere Leuchtmittel auf einer im Wesentlichen ringförmigen Schaltungsplatte um die Bearbeitungsachse herum angeordnet. Auf der Schaltungsplatte sind zudem Fotometer zur Messung der Intensität des Lichts vorgesehen. Es hat sich gezeigt, dass bei Verwendung von Aufsatzwerkzeugen, welche vergleichsweise einen großen Bauraum beanspruchen, bei einer derartigen Handwerkzeugmaschine ein optimales Ausleuchten des Arbeitsfeldes nicht mehr gewährleistet ist. Insbesondere kann störender Schattenwurf auftreten.

Aus der US 6,502,949 B1 ist es bekannt, am Fuß der Handwerkzeugmaschine eine Beleuchtungseinrichtung mit Merkmalen des Oberbegriffs des Patentanspruchs 1 vorzusehen. Dort wird ein Leuchtmittel an einem flexiblen Arm vorgeschlagen, der von der die Handwerkzeugmaschine bedienenden Person entsprechend positioniert werden kann. Dabei hat sich als nachteilig herausgestellt, dass der Arm vergleichsweise viel Bauraum beansprucht und störend im Weg sein kann.

Eine weitere bekannte Handwerkzeugmaschine offenbart die US 7, 185, 998 B2. Auch dort ist eine händisch verstellbare Leuchteinrichtung offenbart. Auch aus der DE 10 2014 209032 A1, der DE 102 15 871 C1 und der EP 1 281 486 A1 sind Handwerkzeugmaschinen mit Leuchteinrichtungen bekannt.

Die Erfindung ist dabei nicht auf Schrauber oder Bohrer begrenzt; sie betrifft vielmehr auch andere Handwerkzeuge wie beispielsweise Handfräsen, Handsägen, Winkelschleifer oder Winkelbohrer.

Insbesondere dann, wenn die Leuchteinrichtung am Fuß der Handwerkzeugmaschine angeordnet ist, ändert oder verringert sich während des Bearbeitungsprozesses, insbesondere während eines Bohrvorganges, der Abstand der Handwerkzeugmaschine zum Arbeitsbereich. Dann, wenn die Hauptabstrahlrichtung des Arbeitslichts nicht entlang der Bearbeitungsachse verläuft, verändert sich die Lage und Größe des ausgeleuchteten Arbeitsbereichs mit sich änderndem Abstand der Handwerkzeugmaschine zur Arbeitsebene. Während des Bearbeitungsvorgangs resultiert hieraus ein sich verändernder Schattenwurf, was zu Irritationen der die Handwerkzeugmaschine bedienenden Person führen kann.

Der vorliegenden Erfindung liegt deshalb die Aufgabe zugrunde, eine Handwerkzeugmaschine bereitzustellen, die diesen Nachteilen Abhilfe leistet.

Diese Aufgabe wird gelöst durch eine Handwerkzeugmaschine mit den Merkmalen des Patentanspruchs 1. Insbesondere ist vorgesehen, dass der Lichtsensor im Betrieb die Lichtintensität des auf den Arbeitsbereich reflektierten Arbeitslichts erfasst und die Lichtintensität repräsentierende Steuersignale erzeugt, dass eine Verstelleinheit zum Ein- und/oder Verstellen des von der Leuchteinrichtung erzeugten Arbeitslichts vorgesehen ist und dass eine Regeleinheit vorgesehen ist, die im Betrieb die Verstelleinheit in Abhängigkeit von den Sensorsignalen ansteuert. Über die Regeleinheit und die Verstelleinheit kann folglich das von der Leuchteinrichtung erzeugte und an den Arbeitsbereich reflektierte Arbeitslicht so dem Bearbeitungsgang nachgeführt werden, dass sich für die die Handwerkzeugmaschine benutzende Person vorteilhafte Lichtverhältnisse ergeben. Dabei können hierfür mehrere Lichtsensoren Verwendung finden. Der Arbeitsbereich kann dabei eine flache Arbeitsebene oder ein eine beliebige Oberfläche aufweisender Bereich sein, die nach so bearbeitendem Gegenstand. Die Verstelleinheit kann dabei als elektronisches Bauteil ausgebildet sein, das die Parameter des Arbeitslichts verstellt. Ebenfalls ist denkbar, dass die Verstelleinheit als Aktuator oder mechanisches Bauteil ausgebildet ist, um die Parameter des Arbeitslichts zu verstellen.

Insbesondere ist vorteilhaft, wenn die Verstelleinheit und die Leuchteinrichtung derart ausgebildet sind, dass mit der Verstelleinheit die Hauptabstrahlrichtung, die Strahlform, der Strahlwinkel und/oder die Lichtintensität des Arbeitslichtes ein- oder verstellt wird, und/oder dass die Anzahl der aktivierten Leuchtmittel ein- und/oder verstellbar ist. Hierdurch können für den Benutzer der Handwerkzeugmaschine optimale Lichtbedingungen in Abhängigkeit der gemessenen Lichtintensität bereitgestellt werden.

Dabei ist vorteilhaft, wenn die Regeleinheit derart ausgebildet ist, dass sie im Betrieb die Verstelleinheit so ansteuert, dass sie die Hauptabstrahlrichtung in den Bereich verstellt, in dem die Sensorachse des Lichtsensors und/oder die Bearbeitungsachse den Arbeitsbereich schneidet. Dadurch kann gewährleistet werden, dass die Hauptabstrahlrichtung, also die erhöhte oder maximale Lichtintensität des Arbeitslichts, während des Bearbeitungsvorganges sich immer in dem Bereich befindet, in dem der Bearbeitungsvorgang, beispielsweise beim Bohren der Bohrvorgang, stattfindet. Gerade dann, wenn die Leuchteinrichtung am Fuß der Handwerkzeugmaschine vorgesehen ist, kann auch bei variierendem Abstand des Arbeitsbereichs zum Handwerkzeug stets der Bereich, in dem der Bearbeitungsvorgang stattfindet, optimal ausgeleuchtet werden. Der Strahlwinkel kann während des Bearbeitungsvorganges konstant sein. Allerdings ist auch denkbar, dass der Strahlwinkel in Abhängigkeit der Verstellung der Hauptabstrahlrichtung ebenfalls verstellt wird, um günstige Lichtverhältnisse zu erreichen.

Ferner ist vorteilhaft, wenn die Regeleinheit derart ausgebildet ist, dass sie im Betrieb die Verstelleinheit so ansteuert, dass die erhöhte oder maximale Lichtintensität des Arbeitslichts im Arbeitsbereich konstant oder weitgehend konstant ist. Auch hierdurch können günstige Lichtverhältnisse geschaffen werden. Hintergrund ist, dass in dem Fall, in dem sich die Handwerkzeugmaschine während des Bearbeitungsvorganges dem Arbeitsbereich nähert, die Lichtintensität im Arbeitsbereich aufgrund der sich nähernden Leuchteinrichtung zunimmt. Je näher die Handwerkzeugmaschine dem Arbeitsbereich kommt, desto heller wird der Arbeitsbereich ausgeleuchtet. Um eine ungünstige Blendung zu vermeiden, kann folglich mit der Erfindung erreicht werden, dass die Lichtintensität während des gesamten Bearbeitungsganges konstant oder weitgehend konstant ist, wodurch eine unerwünschte Blendung unterbunden werden kann.

Gemäß der Erfindung ist ferner denkbar, dass der Lichtsensor und/oder wenigstens ein weiterer Lichtsensor die Intensität des Umgebungslichts erfasst und dass die Regeleinheit derart ausgebildet ist, dass sie im Betrieb die Verstelleinheit in Abhängigkeit des Umgebungslichts ansteuert. Hierdurch kann erreicht werden, dass je nach Intensität des vorhandenen Umgebungslichts ausreichend Arbeitslicht zur Verfügung gestellt werden kann. Ist bereits ausreichend Umgebungslicht vorhanden, so wird über die Leuchteinrichtung kein Licht zur Verfügung gestellt, wodurch Blendungen vermieden werden können und zudem Akku-Leistung eingespart werden kann.

Zur Verstellung des Arbeitslichts kann zudem vorgesehen sein, dass die Leuchteinrichtung und/oder das wenigstens eine Leuchtmittel wenigstens um eine Schwenkachse verschwenkbar angeordnet ist. Insbesondere kann die Verstelleinheit eine Verschwenkung um die wenigstens eine Schwenkachse bewirken. Dabei ist vorteilhaft, wenn die Schwenkachse vorzugsweise senkrecht zur Bearbeitungsachse verläuft, so dass beim Verschwenken um die Schwenkachse die Hauptabstrahlrichtung stets die Bearbeitungsachse schneidet. Durch Vorsehen einer solchen Schwenkachse kann folglich das Arbeitslicht bei variierendem Abstand der Handwerkzeugmaschine zur Arbeitsebene dem Sollbereich im Arbeitsfeld, also dem Bereich, an dem die Handwerkzeugmaschine mit der Arbeitsebene zusammenwirkt, nachgeführt werden.

Ferner ist vorteilhaft, wenn die Handwerkzeugmaschine eine Optik zur Beeinflussung des Arbeitslichts aufweist. Die Optik kann dabei Linsen, Prismen und/oder Reflektoren beinhalten und ist vorzugsweise so ausgebildet, dass mit ihr die Hauptabstrahlrichtung, der Strahlwinkel und/oder die Lichtintensität verstellt werden kann.

Vorteilhafterweise ist der Lichtsensor im oder am Gehäuse so angeordnet, dass die Sensorachse des Lichtsensors in der oder nahe der Bearbeitungsachse liegt. Dadurch kann gewährleistet werden, dass mit dem Lichtsensor die Arbeitsebene in dem Bereich, an dem die Bearbeitung stattfindet, sicher überwacht werden kann. Die Sensorachse des Lichtsensors ist dabei vorzugsweise parallel zur Bearbeitungsachse, nahe der Bearbeitungsachse oder in der Bearbeitungsachse verlaufend angeordnet. Der Lichtsensor bzw. dessen Sensorachse kann aber auch zur Bearbeitungsachse beabstandet und/oder diese schneidend ausgebildet sein, wobei dann zur Bestimmung der Lichtintensität entlang der Bearbeitungsachse eine entsprechende Korrekturrechnung vorzunehmen ist.

Dabei ist denkbar, dass mehrere Lichtsensoren um die Bearbeitungsachse herum angeordnet sind, so dass in deren Detektionsbereiche die Bearbeitungsachse liegt. Vorzugsweise sind die Lichtsensoren symmetrisch um die Bearbeitungsachse herum angeordnet.

Weiterhin ist vorteilhaft, wenn die Sensorachse des wenigstens einen Lichtsensors manuell auf einen Sollbereich im Arbeitsbereich ausrichtbar ist. Die erhöhte oder maximale Lichtintensität des Arbeitslichts wird dann automatisch auf Sollbereich gerichtet, auch dann, wenn die Handwerkzeugmaschine ihre Positionen ändert. Dadurch kann die die Handwerkzeugmaschine benutzende Person einen Sollbereich vorgeben, der auch während des Bearbeitungsvorgangs ausgeleuchtet wird.

Eine weitere vorteilhafte Ausbildung der Erfindung sieht vor, dass die Leuchteinrichtung zur Projektion von Informationen auf den Arbeitsbereich ausgebildet ist. Insbesondere ist denkbar, dass die Leuchteinrichtung als Digitalprojektor (Beamer) ausgebildet ist, so dass die Informationen auf den Arbeitsbereich projiziert werden können. Bei den Informationen kann es sich beispielsweise um Sicherheitshinweise handeln. Denkbar ist, dass die die Handwerkzeugmaschine nutzende Person darauf hingewiesen wird, dass in einem bestimmten Bereich ein Bohren nicht zulässig ist; der Sicherheitshinweis könnte in diesem Falle heißen: "Achtung: Hier nicht bohren". Ferner ist denkbar, dass Maschinenzustände, wie beispielsweise der Ladezustand eines Akkus, die Maschinentemperatur, Verschleißzustände oder dergleichen mittels der Leuchtmittel auf den Arbeitsbereich projiziert werden. Auch Bedienungshinweise oder Auszüge aus einem Handbuch können entsprechend angezeigt werden.

Der wenigstens eine Lichtsensor kann dabei eine Fotodiode, einen Fotowiderstand und/oder CCD-Sensoren umfassen oder als eine CCD-Sensoren umfassende Kamera ausgebildet sein. Vorzugsweise sind mehrere Lichtsensoren vorgesehen, um ein redundantes System bereitstellen zu können.

Eine vorteilhafte Handwerkzeugmaschine ergibt sich dann, wenn das Gehäuse einen Griffabschnitt und einen Fuß aufweist, wobei das Werkzeug auf der dem Fuß abgewandten Seite des Griffabschnitts vorgesehen ist, und wobei die Leuchteinrichtung im oder am Fuß angeordnet ist.

Die Handwerkzeugmaschine kann, wie bereits eingangs ausgeführt, insbesondere als Akku-Schrauber oder als Akku-Bohrer ausgebildet sein, wobei der Akku dann im Fuß oder am Fuß anordenbar ist.

Die eingangs genannte Aufgabe wird auch gelöst durch ein Verfahren zum Betreiben einer Handwerkzeugmaschine, insbesondere erfindungsgemäßen Handwerkszeug Maschine, wobei die Sensorachse des Lichtsensors auf einen Sollbereich im Arbeitsfeld gerichtet wird, wobei die Leuchteinrichtung den Arbeitsbereich ausleuchtet und so ein- oder verstellt wird, und wobei die Hauptabstrahlrichtung auf den Sollbereich gerichtet ist. Dadurch kann gewährleistet werden, dass stets der Sollbereich, also vorzugsweise der Bereich, in dem die Bearbeitung stattfindet, optimal ausgeleuchtet wird. Der Sollbereich kann beispielsweise der Bereich sein, an dem die Bearbeitung im Arbeitsbereich beginnt. Beim Bohrvorgang beispielsweise ist der Sollbereich der Bereich, an dem der Bohrer auf die Arbeitsebene aufgesetzt wird bzw. in die Arbeitsebene eintaucht.

Weitere Einzelheiten und vorteilhafte Ausgestaltungen der Erfindung ergeben sich aus der nachfolgenden Beschreibung, anhand derer ein Ausführungsbeispiel der Erfindung näher beschrieben und erläutert ist.

Es zeigen:
- Figur 1: eine erfindungsgemäße Handwerkzeugmaschine in einer ersten Bearbeitungsposition;
- Figur 2: die Handwerkzeugmaschine gemäß Figur 1 in einer zweiten Arbeitsposition;
- Figur 3: die Handwerkzeugmaschine gemäß Figur 1 in einer dritten Arbeitsposition; und
- Figur 4: eine systematische Darstellung eines vergrößerten Ausschnitts der Handwerkzeugmaschine gemäß Figur 1.

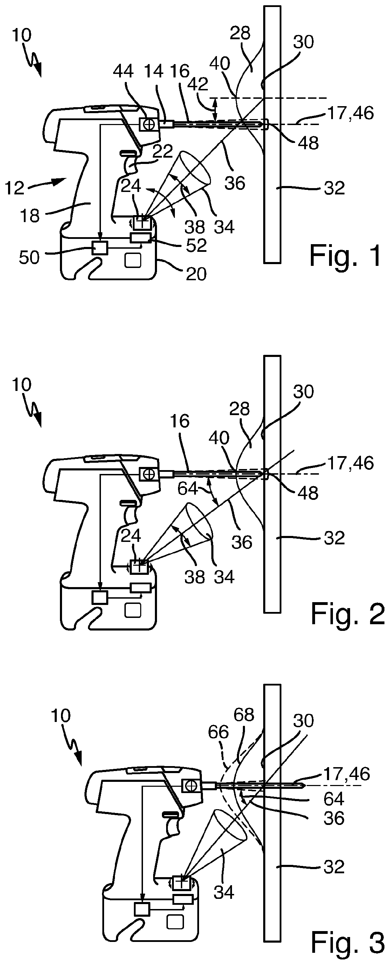

Die in den Figuren 1 bis 3 gezeigte Handwerkzeugmaschine 10 in Form eines Akku-Schraubers umfasst ein Gehäuse 12 mit einer Werkzeugaufnahme 14 zur Aufnahme eines Werkzeuge entlang einer Bearbeitungsachse 17, hier zur Aufnahme eines Bohrers 16. Anstelle des Bohrers 16 können selbstverständlich auch andere Werkzeuge wie beispielsweise Schraubaufsätze, Polieraufsätze oder dergleichen Verwendung finden. Bei der Werkzeugaufnahme 14 kann es sich um eine Steckaufnahme, ein Bohrfutter oder eine sonstige Werkzeugaufnahme handeln.

Das Gehäuse 12 weist einen Griffabschnitt 18 und einen Fuß 20 auf, in welchem ein Akkumulator untergebracht ist. Innerhalb des Gehäuses 12 ist ein nicht dargestellter Motor und eine Getriebeeinheit zum Antreiben der Werkzeugaufnahme 14, bzw. des Bohrers 16, vorgesehen. Der Motor ist dabei über einen Druckschalter 22 ansteuerbar.

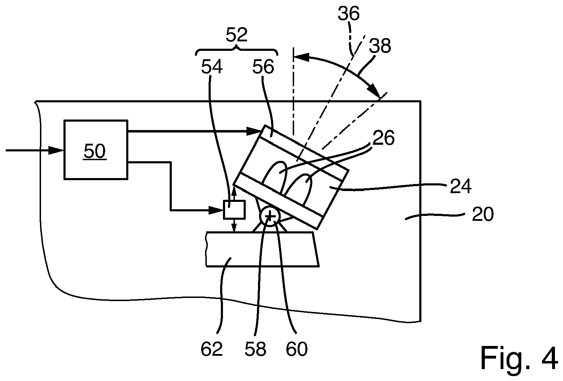

Wie aus den Figuren 1 bis 3 deutlich wird, ist am Fuß 20 eine Leuchteinrichtung 24 mit Leuchtmitteln 26 vorgesehen, was dem Ausschnitt gemäß Figur 4 entnommen werden kann. Die Leuchteinrichtung 24 mit den Leuchtmitteln 26 dient dabei zur Bereitstellung von Arbeitslicht 28 innerhalb auf einem Arbeitsbereich 30. Bei dem Arbeitsbereich 30 kann es sich beispielsweise um eine weitgehend ebene Fläche, wie beispielsweise um die Oberfläche einer Wand 32, handeln.

Zur Beleuchtung des Arbeitsbereichs 30 erzeugt die Leuchteinrichtung 24 einen Lichtkegel 34, der um eine Hauptabstrahlrichtung 36 verläuft. Der Lichtkegel 34 schließt dabei einen Strahlwinkel 38 ein. Entlang der Hauptabstrahlrichtung 36 weist das Arbeitslicht 28 eine erhöhte Lichtintensität auf, was in den Figuren 1 bis 3 durch das Maximum der schematisch angedeuteten Lichtverteilung des Arbeitslichts 28 deutlich werden soll. Bei der Darstellung gemäß Figur 1 liegt die erhöhte Lichtintensität 40 nicht in dem Bereich, in dem die Spitze des Bohrers 16 gegen den Arbeitsbereich 30 wirkt (Sollbereich), sondern ist dazu um das Maß 42 versetzt.

Die Handwerkzeugmaschine 10 umfasst ferner einen Lichtsensor 44 zur Messung der Lichtintensität im Arbeitsbereich 30. Der Lichtsensor 44 ist dabei vorzugsweise derart angeordnet, dass seine Sensorachse 46 entlang der Bearbeitungsachse 17 verläuft.

Der Lichtsensor 44 ist ferner derart ausgebildet, dass er einen entlang einer Sensorachse 46 verlaufenden, vergleichsweise kleinen Erfassungsbereich 48 zur Detektion der Lichtintensität aufweist.

Auch wenn in den Figuren 1 bis 3 lediglich ein Lichtsensor 44 vorgesehen ist, ist denkbar, mehrere Lichtsensoren, insbesondere um die Bearbeitungsachse 17 am Gehäuse 12 anzuordnen. Die Lichtsensoren 44 dienen dabei ebenfalls zur Detektierung der Lichtintensität im Erfassungsbereich 44.

Im Betrieb dient der Lichtsensor 44, wie bereits erwähnt, zur Erfassung des am Arbeitsbereich 30 reflektierten Arbeitslichts 28. Der Lichtsensor 44 erzeugt dabei die Lichtintensität repräsentierende Sensorsignale, welche einer Regeleinheit 50 zugeführt werden. Die Regeleinheit 50 dient zur Ansteuerung einer Verstelleinheit 52, mittels welcher die Leuchteinrichtung 24 in Abhängigkeit der von dem Lichtsensor 44 erzeugten Sensorsignale angesteuert wird. Mit der Verstelleinheit kann die Leuchteinheit 24 so ein- oder verstellt werden, dass die Hauptabstrahlrichtung 36, der Strahlwinkel 38, die Lichtintensität des Arbeitslichts 28 und/oder die Anzahl der aktivierbaren Leuchtmittel 26 ein- und/oder verstellbar ist.

Die Verstelleinheit 52 kann dabei mehrere Aktuatoren umfassen. Gemäß der schematischen Darstellung in Figur 4 umfasst die Verstelleinheit 52 beispielsweise einen Verstellantrieb 54 sowie eine Verstelloptik 56. Mittels dem Verstellantrieb 54 kann beispielsweise die Leuchteinrichtung 24 um eine Schwenkachse 58 verschwenkt werden, wobei die Schwenkachse 58 vorzugsweise senkrecht zur Bearbeitungsachse 17 verlaufend angeordnet ist. Durch Verschwenken der Leuchteinrichtung 24 kann die Hauptabstrahlrichtung 36 bezüglich der Werkzeugmaschine 10 bzw. bezüglich des Arbeitsbereichs 30 verstellt werden. Gemäß der Erfindung ist ferner denkbar, dass die Leuchteinrichtung 24 nicht nur um eine Schwenkachse 58, sondern um mehrere Schwenkachsen verschwenkbar angeordnet ist. Dazu ist denkbar, dass die Leuchteinrichtung 24 über ein entsprechend geeignetes Gelenk 60, beispielsweise ein Kugelgelenk, auf einem Träger 62 gelagert ist.

Die Verstelloptik 56 kann insbesondere Linsen, Prismen und/oder Reflektoren beinhalten und kann vorzugsweise derart ausgebildet sein, dass der Strahlwinkel 38 und die Strahlform verstellbar ist.

Die Verstelleinheit 52 kann ferner so ausgebildet sein, dass die von den Leuchtmitteln 26 erzeugte Intensität des Arbeitslichts 28 verstellbar ist.

Die Regeleinheit 50 ist so ausgebildet, dass sie im Betrieb die Verstelleinheit 52 insbesondere derart ansteuert, dass die Hauptabstrahlrichtung 36 in den die Sensorachse 46 des Lichtsensors 44 umgebenden Erfassungsbereich 48 verstellt wird, wie es in Figur 2 gezeigt ist. Das Abstandsmaß 42 zwischen der erhöhten Lichtintensität 40 des Arbeitslichts 28 zur Sensorachse 46, und damit zur Bearbeitungsachse 17, wird dabei minimiert und beträgt vorzugsweise Null.

Im Betrieb der Handwerkzeugmaschine 10 kann dies folgendermaßen erreicht werden. Die Handwerkzeugmaschine 10 wird, wie in Figur 1 dargestellt, mit der Spitze des Bohrers 16, auf den Arbeitsbereich 30 aufgesetzt. Der Lichtsensor 44 ist dabei auf den Erfassungsbereich 48 gerichtet, welcher einen Sollbereich darstellt, bei dem eine erhöhte Lichtintensität im Arbeitsbereich 30 gegeben sein soll. In einem nächsten Schritt leuchtet das Leuchtmittel 26 den denkbaren Arbeitsbereich 30 aus, beispielsweise durch Verschwenken der Leuchteinrichtung 24 um die Schwenkachse 58 von einer Schwenkendstellung hin zu einer anderen Schwenkendstellung. Der Bereich erhöhter Lichtintensität 40 wird damit über den gesamten denkbaren Arbeitsbereich bewegt. Während des Bewegens des Arbeitslichts 28 über den gesamten Arbeitsbereich 30 erfasst der Lichtsensor 44 die Lichtintensität im Erfassungsbereich 48. Während dieses Kalibriervorganges kann folglich die Einstellung der Leuchteinrichtung 24 bestimmt werden, in welcher der Lichtsensor 44 die maximale Lichtintensität 40 detektiert. In dieser Einstellung liegen folglich optimale Lichtverhältnisse im Sollbereich des Arbeitsbereichs 30 vor, also in dem Bereich, in dem die Hauptabstrahlrichtung 36 auf den Erfassungsbereich 48 gerichtet ist, bzw. in dem Bereich, in dem die Hauptabstrahlrichtung 36 die Sensorachse 46 schneidet. Die maximale Lichtintensität 40 liegt dabei dann, wie aus Figur 2 deutlich wird, in der Bearbeitungsachse 17 bzw. in der Sensorachse 46.

Folglich kann dadurch gewährleistet werden, dass die optimale Lichtverteilung, also der Bereich der erhöhten Lichtintensität 40 in den Sollbereich verstellt wird, in dem der Bohrer 16 gegen den Arbeitsbereich 30 wirkt. Die Verstellung erfolgt dabei selbsttätig ohne Zutun der die Handwerkzeugmaschine 10 führenden Person.

Während des Bearbeitungsvorganges dringt der Bohrer 12 in den Arbeitsbereich 30, bzw. in die Wand 32 ein, was in Figur 3 gezeigt ist. Dadurch verändert sich der Abstand der Handwerkzeugmaschine 10 zum Arbeitsbereich 30. Die Regeleinheit 50 ist nun derart ausgebildet, dass sie während des Bearbeitungsvorganges die Verstelleinheit 52 derart ansteuert, dass das Arbeitslicht 28, und insbesondere die Hauptabstrahlrichtung 38, im Erfassungsbereich 48 im Arbeitsbereich verbleibt. Je näher folglich die Handwerkzeugmaschine 10 dem Arbeitsbereich kommt, desto größer wird der Winkel 64 zwischen der Sensorachse 46 und der Hauptabstrahlrichtung 36. Das von der Leuchteinrichtung 24 ausgesandte Licht wird folglich nachgeführt, so dass im Erfassungsbereich 48, bzw. in dem Bereich, in dem die Sensorachse 46 den Arbeitsbereich 30 schneidet, optimale Lichtverhältnisse vorherrschen.

Aufgrund der Annäherung der Handwerkzeugmaschine 10 an den Arbeitsbereich 30 während des Bearbeitungsvorganges nimmt zudem die Lichtintensität des Arbeitslichts 28 im Arbeitsbereich 30 zu. Je näher die Leuchteinrichtung 24 dem Arbeitsbereich 30 kommt, desto heller wird das dort reflektierte Arbeitslicht. In der Figur 3 ist die erhöhte Lichtintensität durch die gestrichelte Linie 66 angedeutet, die sich ergeben würde, wenn die Handwerkzeugmaschine 10 dem Arbeitsbereich 30 angenähert wird, ohne dass die Lichtintensität des von den Leuchtmitteln 26 ausgesendeten Lichtes verstellt wird. Um dem entgegenzuwirken, werden die Leuchtmittel 26 von der Regeleinheit 50 derart angesteuert, dass, je näher die Handwerkzeugmaschine 10 dem Arbeitsbereich 30 kommt, die Intensität des ausgesendeten Lichtes abnimmt. Dadurch wird eine insgesamt konstante Lichtintensität während des gesamten Bearbeitungsvorganges erreicht, wie es in Figur 3 mit der durchgezogenen Linie angedeutet ist.

An der Handwerkzeugmaschine 10 kann ferner ein weiterer Lichtsensor vorgesehen sein, der zur Erfassung des Umgebungslichtes dient. Je nach Helligkeit des Umgebungslichtes kann folglich die Regeleinheit 50 die Leuchtmittel 26 derart ansteuern, dass in Abhängigkeit vom Umgebungslicht eine optimale Beleuchtung bereitgestellt werden kann. Hierdurch können insbesondere Blendungen der die Handwerkzeugmaschine führenden Person vermieden werden.

Der Lichtsensor 44 ist dabei verstellbar angeordnet. Die Sensorachse des Lichtsensors 44 bzw. der Erfassungsbereich 48 des Lichtsensors 44 kann folglich an einen anderen Punkt im Arbeitsbereich 30 bewegt werden. Dies hat zur Folge, dass dieser Sollbereich, bzw. der Erfassungsbereich 48 des Lichtsensors, während der Bearbeitung optimal ausgeleuchtet wird, da die Hauptabstrahlrichtung 36 dann auf diesen Sollbereich während des Bearbeitungsvorganges ausgerichtet wird.

Die Leuchteinrichtung 24 kann ferner als Digitalprojektor ausgebildet sein, um Informationen auf dem Arbeitsbereich 30 anzuzeigen. Bei den Informationen kann es sich beispielsweise um Sicherheitshinweise oder um Bedienungshinweise der Handwerkzeugmaschine handeln. Ferner ist denkbar, die Maschinenzustände, den Ladezustand des Akkumulators, die Maschinentemperatur und dergleichen anzuzeigen.

Der wenigstens eine Lichtsensor kann beispielsweise als Fotodiode, Fotowiderstand oder als CCD-Sensoren ausgebildet sein.

## Patentansprüche

1. Handwerkzeugmaschine (10), insbesondere elektrisch betriebene Handwerkzeugmaschine, mit einem Gehäuse (12), mit einer Bearbeitungsachse (17), entlang der ein Werkzeug (16) angeordnet oder anordenbar ist, mit einer Leuchteinrichtung (24), die wenigstens ein aktivierbares Leuchtmittel (26)aufweist, wobei die Leuchteinrichtung (24) zur Beleuchtung eines Arbeitsbereichs (30) im Betrieb Arbeitslicht (28) innerhalb eines Strahlwinkels (38) mit einer, entlang einer Hauptabstrahlrichtung (36) erhöhten oder maximalen Lichtintensität (40) erzeugt, und mit wenigstens einem Lichtsensor (44) zur Messung der Lichtintensität, wobei der Lichtsensor (44) im Betrieb die Lichtintensität des am Arbeitsbereich (30) reflektierten Arbeitslichts (28) erfasst und die Lichtintensität repräsentierende Sensorsignal erzeugt, wobei eine Verstelleinheit (52) zum Ein- und/oder Verstellen des von der Leuchteinrichtung (24) erzeugten Arbeitslichts (28) vorgesehen ist, und wobei eine Regeleinheit (50) vorgesehen ist, die im Betrieb die Verstelleinheit (52) in Abhängigkeit von den Sensorsignalen ansteuert, **dadurch gekennzeichnet, dass** Verstelleinheit (52) und die Leuchteinrichtung (24) derart ausgebildet sind, dass mit der Verstelleinheit (52) die Hauptabstrahlrichtung (36), die Strahlform und/oder der Strahlwinkel (38) ein- und/oder verstellbar ist.

2. Handwerkzeugmaschine (10) nach Anspruch 1,
**dadurch gekennzeichnet, dass** Verstelleinheit (52) und die
Leuchteinrichtung (24) derart ausgebildet sind, dass mit der Verstelleinheit (52) die die Lichtintensität des Arbeitslichts (28) und/oder die Anzahl der aktivierten Leuchtmittel (26) ein- und/oder verstellbar ist.

3. Handwerkzeugmaschine (10) nach Anspruch 1 oder 2, **dadurch gekennzeichnet, dass** die Regeleinheit (50) derart ausgebildet ist, dass sie im Betrieb die Verstelleinheit (52) so ansteuert, dass die Hauptabstrahlrichtung (36) in den Sollbereich verstellt wird, in dem die Sensorachse (46) des Lichtsensors (44) und/oder die Bearbeitungsachse (17) den Arbeitsbereich (30) schneidet.

4. Handwerkzeugmaschine (10) nach einem der vorhergehenden Ansprüche, **dadurch gekennzeichnet, dass** die Regeleinheit (50) derart ausgebildet ist, dass sie im Betrieb die Verstelleinheit (52) so ansteuert, dass die erhöhte oder maximale Lichtintensität (40) des Arbeitslichts (28) im Arbeitsbereich (30) konstant oder weitgehend konstant ist.

5. Handwerkzeugmaschine (10) nach einem der vorhergehenden Ansprüche, **dadurch gekennzeichnet, dass** der Lichtsensor (44) und/oder wenigstens ein weiterer Lichtsensor die Intensität des Umgebungslichts erfasst und dass die Regeleinheit (50) derart ausgebildet ist, dass sie im Betrieb die Verstelleinheit (52) in Abhängigkeit des Umgebungslichts ansteuert.

6. Handwerkzeugmaschine (10) nach einem der vorhergehenden Ansprüche, **dadurch gekennzeichnet, dass** die Leuchteinrichtung (24) und/oder das wenigstens eine Leuchtmittel (26) wenigstens um eine Schwenkachse (58) zur Verstellung der Hauptabstrahlrichtung (36) verschwenkbar angeordnet ist.

7. Handwerkzeugmaschine (10) nach einem der vorhergehenden Ansprüche, **dadurch gekennzeichnet, dass** eine Optik (56) zur Beeinflussung des Arbeitslichts (28) vorgesehen ist.

8. Handwerkzeugmaschine (10) nach einem der vorhergehenden Ansprüche, **dadurch gekennzeichnet, dass** der wenigstens eine Lichtsensor (44) in oder am Gehäuse so angeordnet ist, und dass die Sensorachse (46) des Lichtsensors (44) in der oder nahe der Bearbeitungsachse (17) liegt.

9. Handwerkzeugmaschine (10) nach einem der vorhergehenden Ansprüche, **dadurch gekennzeichnet, dass** mehrere Lichtsensoren (44) um die Bearbeitungsachse (17) herum angeordnet sind, so dass in deren Detektionsbereiche die Bearbeitungsachse (17) liegt.

10. Handwerkzeugmaschine (10) nach einem der vorhergehenden Ansprüche, **dadurch gekennzeichnet, dass** die Sensorachse (46) des wenigstens einen Lichtsensors (44) manuell auf einen Sollbereich im Arbeitsbereich (30) ausrichtbar ist.

11. Handwerkzeugmaschine (10) nach einem der vorhergehenden Ansprüche, **dadurch gekennzeichnet, dass** die Leuchteinrichtung (24) zur Projektion von Informationen auf den Arbeitsbereich (30) ausgebildet sind.

12. Handwerkzeugmaschine (10) nach einem der vorhergehenden Ansprüche, **dadurch gekennzeichnet, dass** der Lichtsensor (44) wenigstens eine Fotodiode, einen Fotowiderstand und/oder CCD-Sensoren umfasst oder als CCD-Sensoren umfassende Kamera ausgebildet ist.

13. Handwerkzeugmaschine (10) nach einem der vorhergehenden Ansprüche, **dadurch gekennzeichnet, dass** das Gehäuse (12) einen Griffabschnitt (18) und einen Fuß (20) aufweist, wobei das Werkzeug (16) auf der dem Fuß (20) abgewandten Seite des Griffabschnitts (18) vorgesehen ist, und wobei die Leuchteinrichtung (24) im oder am Fuß (20) angeordnet ist.

14. Handwerkzeugmaschine (10) nach Anspruch 13, **dadurch gekennzeichnet, dass** die Handwerkzeugmaschine (10) als Akku-Schrauber oder Akku-Bohrer ausgebildet ist, wobei der Akku im oder am Fuß (20) anordnenbar ist.

15. Verfahren zum Betreiben einer Handwerkzeugmaschine (10) nach einem der vorhergehenden Ansprüche, **dadurch gekennzeichnet, dass** die Sensorachse (46) des Lichtsensors (44) auf einen Sollbereich im Arbeitsfeld (30) gerichtet wird, dass die Leuchteinrichtung (24) den Arbeitsbereich (30) ausleuchtet und so ein- oder verstellt wird, dass die Hauptabstrahlrichtung auf den Sollbereich gerichtet ist.

## Claims

1. Handheld power tool (10), in particular an electrically operated handheld power tool, comprising a housing (12), comprising a machining axis (17) along which a tool (16) is or can be arranged, comprising a lighting device (24) that has at least one activatable lamp (26), the lighting device (24) generating work light (28) within a beam angle (38) with an increased or maximum light intensity (40) in a main emission direction (36) in order to illuminate a work region (30) during operation, and comprising at least one light sensor (44) for measuring the light intensity, the light sensor (44) detecting the light intensity of the work light (28) reflected on the work region (30) during operation and generating a sensor signal representing the light intensity, an adjustment unit (52) being provided for setting and/or adjusting the work light (28) generated by the lighting device (24), and a control unit (50) being provided which controls the adjustment unit (52) on the basis of the sensor signals during operation, **characterized in that** the adjustment unit (52) and the lighting device (24) are designed in such a way that the main emission direction (36), the beam shape, and/or the beam angle (38) can be set and/or adjusted by means of the adjustment unit (52).

2. Handheld power tool (10) according to claim 1, **characterized in that** the adjustment unit (52) and the lighting device (24) are designed in such a way that the light intensity of the work light (28) and/or the number of activated lamps (26) can be set and/or adjusted by means of the adjustment unit (52).

3. Handheld power tool (10) according to claim 1 or 2, **characterized in that** the control unit (50) is designed such that it controls the adjustment unit (52) during operation in such a way that the main emission direction (36) is adjusted into the target region, in which the sensor axis (46) of the light sensor (44) and/or the machining axis (17) intersects the work region (30).

4. Handheld power tool (10) according to any of the preceding claims, **characterized in that** the control unit (50) is designed such that it controls the adjustment unit (52) during operation in such a way that the increased or maximum light intensity (40) of the work light (28) in the work region (30) is constant or largely constant.

5. Handheld power tool (10) according to any of the preceding claims, **characterized in that** the light sensor (44) and/or at least one further light sensor detects the intensity of the ambient light and **in that** the control unit (50) is designed such that it controls the adjustment unit (52) on the basis of the ambient light during operation.

6. Handheld power tool (10) according to any of the preceding claims, **characterized in that** the lighting device (24) and/or the at least one lamp (26) is arranged such that it can be pivoted at least about one pivot axis (58) in order to adjust the main emission direction (36).

7. Handheld power tool (10) according to any of the preceding claims, **characterized in that** optics (56) are provided for influencing the work light (28).

8. Handheld power tool (10) according to any of the preceding claims, **characterized in that** the at least one light sensor (44) is arranged in or on the housing in such a way that the sensor axis (46) of the light sensor (44) is located in or near the machining axis (17).

9. Handheld power tool (10) according to any of the preceding claims, **characterized in that** a plurality of light sensors (44) is arranged around the machining axis (17) so that the machining axis (17) is located in the detection regions thereof.

10. Handheld power tool (10) according to any of the preceding claims, **characterized in that** the sensor axis (46) of the at least one light sensor (44) can be aligned manually with a target region in the work region (30) .

11. Handheld power tool (10) according to any of the preceding claims, **characterized in that** the lighting device (24) is designed to project information onto the work region (30).

12. Handheld power tool (10) according to any of the preceding claims, **characterized in that** the light sensor (44) comprises at least one photodiode, a photoresistor, and/or CCD sensors or is designed as a camera comprising CCD sensors.

13. Handheld power tool (10) according to any of the preceding claims, **characterized in that** the housing (12) has a handle portion (18) and a base (20), the tool (16) being provided on the side of the handle portion (18) that is remote from the base (20), and the lighting device (24) being arranged in or on the base (20).

14. Handheld power tool (10) according to claim 13, **characterized in that** the handheld power tool (10) is designed as a cordless screwdriver or cordless drill, it being possible to arrange the rechargeable battery in or on the base (20).

15. Method for operating a handheld power tool (10) according to any of the preceding claims, **characterized in that** the sensor axis (46) of the light sensor (44) is directed to a target region in the work area (30), and **in that** the lighting device (24) illuminates the work region (30) and is set or adjusted such that the main emission direction is directed to the target region.

## Revendications

1. Machine-outil portative (10), en particulier machine-outil portative à fonctionnement électrique, avec un boîtier (12), avec un axe d'usinage (17), le long duquel un outil (16) est disposé ou peut être disposé, avec un dispositif d'éclairage (24), qui présente au moins un moyen d'éclairage (26) activable, dans laquelle le dispositif d'éclairage (24) pour l'éclairage d'une zone de travail (30) pendant le fonctionnement produit une lumière de travail (28) à l'intérieur d'un angle de faisceau (38) avec une intensité lumineuse (40) accrue ou maximale le long d'une direction de rayonnement principale (36), et avec au moins un capteur de lumière (44) pour la mesure de l'intensité lumineuse, dans laquelle le capteur de lumière (44) lors du fonctionnement détecte l'intensité lumineuse de la lumière de travail (28) réfléchie sur la zone de travail (30) et produit un signal de capteur représentant l'intensité lumineuse, dans laquelle une unité de réglage (52) est prévue pour l'ajustement et/ou le réglage de la lumière de travail (28) produite par le dispositif d'éclairage (24), et dans laquelle une unité de régulation (50) est prévue, qui lors du fonctionnement commande l'unité de réglage (52) en fonction des signaux de capteur, **caractérisée en ce que** l'unité de réglage (52) et le dispositif d'éclairage (24) sont réalisés de telle sorte que la direction de rayonnement principale (36), la forme de faisceau et/ou l'angle de faisceau (38) est ajustable et/ou réglable avec l'unité de réglage (52).

2. Machine-outil portative (10) selon la revendication 1, **caractérisée en ce que** l'unité de réglage (52) et le dispositif d'éclairage (24) sont réalisés de telle sorte que la l'intensité lumineuse (40) de la lumière de travail (28) et/ou le nombre des moyens d'éclairage (26) activés est ajustable et/ou réglable avec l'unité de réglage (52).

3. Machine-outil portative (10) selon la revendication 1 ou 2, **caractérisée en ce que** l'unité de régulation (50) est réalisée de telle sorte que lors du fonctionnement elle commande l'unité de réglage (52), de sorte que la direction de rayonnement principale (36) est réglée dans la zone théorique dans laquelle l'axe de capteur (46) du capteur de lumière (44) et/ou l'axe d'usinage (17) coupe la zone de travail (30).

4. Machine-outil portative (10) selon l'une quelconque des revendications précédentes, **caractérisée en ce que** l'unité de régulation (50) est réalisée de telle sorte que lors du fonctionnement elle commande l'unité de réglage (52) de sorte que l'intensité lumineuse (40) accrue ou maximale, de la lumière de travail (28) dans la zone de travail (30) est constante ou en grande partie constante.

5. Machine-outil portative (10) selon l'une quelconque des revendications précédentes, **caractérisée en ce que** le capteur de lumière (44) et/ou au moins un autre capteur de lumière détecte l'intensité de la lumière ambiante et que l'unité de régulation (50) est réalisée de telle sorte que lors du fonctionnement elle commande l'unité de réglage (52) en fonction de la lumière ambiante.

6. Machine-outil portative (10) selon l'une quelconque des revendications précédentes, **caractérisée en ce que** le dispositif d'éclairage (24) et/ou le au moins un moyen d'éclairage (26) est disposé de manière à pouvoir pivoter au moins autour d'un axe de pivotement (58) pour le réglage de la direction de rayonnement principale (36).

7. Machine-outil portative (10) selon l'une quelconque des revendications précédentes, **caractérisée en ce qu'**une optique (56) est prévue pour influencer la lumière de travail (28) .

8. Machine-outil portative (10) selon l'une quelconque des revendications précédentes, **caractérisée en ce que** le au moins un capteur de lumière (44) est disposé dans ou sur le boîtier, et que l'axe de capteur (46) du capteur de lumière (44) se situe dans ou à proximité de l'axe d'usinage (17).

9. Machine-outil portative (10) selon l'une quelconque des revendications précédentes, **caractérisée en ce que** plusieurs capteurs de lumière (44) sont disposés autour de l'axe d'usinage (17), de sorte que l'axe d'usinage (17) se situe dans les zones de détection de celui-ci.

10. Machine-outil portative (10) selon l'une quelconque des revendications précédentes, **caractérisée en ce que** l'axe de capteur (46) du au moins un capteur de lumière (44) peut être orienté manuellement sur une zone théorique dans la zone de travail (30).

11. Machine-outil portative (10) selon l'une quelconque des revendications précédentes, **caractérisée en ce que** le dispositif d'éclairage (24) est réalisé pour la projection d'informations sur la zone de travail (30).

12. Machine-outil portative (10) selon l'une quelconque des revendications précédentes, **caractérisée en ce que** le capteur de lumière (44) comprend au moins une photodiode, une photorésistance et/ou des capteurs CCD ou est réalisé sous la forme d'une caméra comprenant des capteurs CCD.

13. Machine-outil portative (10) selon l'une quelconque des revendications précédentes, **caractérisée en ce que** le boîtier (12) présente une partie poignée (18) et un pied (20), dans laquelle l'outil (16) est prévu sur la face de la partie poignée (18) opposée au pied (20), et dans laquelle le dispositif d'éclairage (24) est disposé dans ou sur le pied (20) .

14. Machine-outil portative (10) selon la revendication 13, **caractérisée en ce que** la machine-outil portative (10) est réalisée sous la forme d'une visseuse sans fil ou perceuse sans fil, dans laquelle les batteries peuvent être disposées dans ou sur le pied (20).

15. Procédé pour faire fonctionner une machine-outil portative (10) selon l'une quelconque des revendications précédentes, **caractérisé en ce que** l'axe de capteur (46) du capteur de lumière (44) est dirigé sur une zone théorique dans le champ de travail (30), que le dispositif d'éclairage (24) éclaire la zone de travail (30) et est ajusté ou réglé de sorte que la direction de rayonnement principale est dirigée sur la zone théorique.
